# NOUVEAU FASCICULE DE BREVET EUROPEEN

(11) **EP 2 821 583 B2**
(45) Date de publication et mention de la décision concernant l'opposition: **09.12.2026**
(45) Mention de la délivrance du brevet: 23.12.2015
(21) Numéro de dépôt: 14175341.8
(22) Date de dépôt: 02.07.2014
(51) Int. Cl.: E06B 9/68, H02K 7/102, H02K 7/116, E06B 9/72

(54) **Actionneur d'entrainement d'un écran domotique et installation comprenant un tel actionneur**
Antriebsvorrichtung für automatisierten Sonnenschutz, und Anlage, die eine solche Vorrichtung umfasst
Actuator for driving an automatic sunscreen and facility including such an actuator

(30) Priorité: 03.07.2013 FR 1356503
(43) Date de publication de la demande: 07.01.2015
(73) Titulaire: SOMFY ACTIVITES SA, 74300 Cluses (FR)
(72) Inventeur: Schädlich, Frank, 74700 CORDON (FR)
(74) Mandataire: Lavoix

(56) Documents cités:
- EP-A1- 0 508 949
- EP-A1- 2 267 330
- EP-A2- 0 976 909
- WO-A2-2007/069288
- FR-A1- 2 972 872

## Description

L'invention concerne un actionneur d'entraînement d'un écran domotique de type volet roulant, store, rideau, grille, écran de projection ou encore porte de garage.

Dans le domaine des actionneurs d'entraînement d'écrans domotiques, il est connu d'utiliser un dispositif de freinage, pour d'une part, freiner le mouvement à l'approche d'un obstacle tel qu'une butée de fin de course et, d'autre part, assurer l'immobilisation de la charge lorsque le moteur ne fonctionne pas. Dans le cas d'un écran domotique de type store ou rideau de faible dimension, la légèreté de l'écran domotique induit que le couple exercé par l'écran sur le moteur, notamment dans la phase de descente, est faible. Ainsi, il n'est pas nécessaire d'équiper l'actionneur d'un dispositif de frein externe, car le moteur peut être lui-même freiné par court-circuit ou réluctance. Ce freinage peut être complété par l'utilisation d'un réducteur irréversible qui ne transmet pas le couple exercé par la charge au moteur.

Pour des écrans de plus grandes dimensions, il est toutefois indispensable d'utiliser un actionneur comprenant un frein mécanique ou électromécanique extérieur au moteur, pour assurer la protection des personnes.

Un tel actionneur, décrit dans EP-A-0 508 949 ou EP A-2 267 330, comprend un moteur électrique de type asynchrone, un réducteur et un frein à plateau déplaçable sous l'action du champ magnétique produit par les enroulements du moteur. Les moteurs asynchrones ont l'avantage de pouvoir être branchés directement sur le secteur mais leur pilotage à vitesse variable est complexe car il implique d'agir sur la fréquence du signal de commande tout en conservant la puissance nécessaire au fonctionnement. Cela implique généralement de sur-dimensionner le moteur.

Pour pallier ce problème de pilotage à vitesse variable du moteur asynchrone, il est connu d'équiper les actionneurs d'entraînement d'écrans domotiques de moteurs à courant continu, à balais et collecteur ou à commutation électronique. Dans ces derniers, le rotor est formé par un ou plusieurs aimants permanents, tandis que le stator est formé par un ensemble de bobines ; la commutation de l'alimentation des différentes bobines permet de créer un champ magnétique tournant qui entraine en rotation les aimants du rotor. Les moteurs à commutation électronique n'utilisent pas de système balais-collecteurs, ce qui les rend plus robuste. Cependant ce type de moteur nécessite une unité électronique de pilotage fiable et complexe.

Dans la plupart des actionneurs d'entraînement d'un écran domotique, il est nécessaire de connaître la position de l'arbre de sortie à tout instant. Cela est réalisé soit par une unité de comptage mécanique, entrainée par un élément tournant solidaire de l'arbre de sortie du moteur soit par une unité de comptage électronique, notamment comptant le nombre de commutations du moteur. Dans le cas d'un comptage au niveau de la sortie du moteur ou au niveau du rotor, celui-ci reflète avec exactitude la position du moteur, mais est imprécis par rapport à la position réelle de la charge. A l'inverse, un comptage au plus près de la charge, par exemple au niveau de la rotation d'un tube d'enroulement de l'écran domotique, est plus fiable quant à sa position réelle, mais nécessite une construction plus complexe.

L'intégration d'un moteur à commutation électronique dans un actionneur d'entraînement d'un écran domotique invite de manière logique à utiliser un repérage électronique de la position du rotor. Cependant, si ce moteur est utilisé avec un frein fonctionnant en tout ou rien, comme un frein à plateau, le moteur risque de fonctionner en générateur sur certaines plages de fonctionnement, alors qu'il est entraîné par la charge, ce qui génère des problématiques de dissipation thermique.

C'est à ces inconvénients qu'entend plus particulièrement remédier l'invention en proposant un actionneur d'entraînement d'un écran domotique facilement pilotable, relativement silencieux et qui ne nécessite pas un module électronique de commande complexe.

A cet effet, l'invention concerne un actionneur d'entraînement d'un écran domotique comprenant un moteur électrique, un réducteur de transmission du mouvement du moteur à l'écran domotique et un frein. Conformément à l'invention, le moteur est un moteur électrique à commutation électronique et le frein est un frein mécanique présentant un couple de traînée permanent. En outre, l'actionneur comprend des moyens de repérage de la position d'un rotor du moteur qui sont intégrés au module électronique de commutation des bobines d'un stator du moteur.

Grâce à l'invention, l'association d'un moteur à commutation électronique à courant continu avec un frein mécanique permet, à la descente de l'écran, de dissiper l'énergie générée par la charge. Ainsi, le moteur ne fonctionne jamais en générateur. En outre, l'utilisation d'un moteur à commutation électronique permet une meilleure régulation de la vitesse.

Selon des aspects avantageux mais non obligatoires de l'invention, un actionneur d'entraînement d'un écran domotique peut comporter une ou plusieurs des caractéristiques suivantes, prises dans toute combinaison admissible :
- Le frein est un frein à ressort comprenant un ressort hélicoïdal qui est monté serrant dans un tambour, les deux extrémités du ressort étant recourbées vers l'intérieur du cylindre et coopèrent chacune avec une pièce solidaire d'un arbre d'entrée du frein et avec un taquet solidaire d'un arbre de sortie de frein.
- En variante, le frein est un frein à ressort comprenant un ressort hélicoïdal qui est monté serrant autour d'un moyeu, les deux extrémités du ressort étant recourbées vers l'extérieur du moyeu et coopèrent chacune avec une pièce solidaire d'un arbre d'entrée du frein et avec un taquet solidaire d'un arbre de sortie du frein.
- Le ressort est un ressort hélicoïdal à spires jointives.
- En variante, le frein est un frein à came.
- Le frein est disposé entre deux étages du réducteur.
- L'actionneur comprend des capteurs de rotation d'un rotor du moteur détectant la position du rotor.
- L'actionneur comprend des moyens de reconstitution d'au moins une partie des signaux de repérage de la position d'un rotor du moteur.

L'invention concerne enfin une installation de manœuvre d'un écran domotique, cette installation comprenant un tube autour duquel l'écran est apte à s'enrouler et un actionneur d'entraînement du tube tel que décrit précédemment.

L'invention concerne également une installation de manœuvre d'un écran domotique, cette installation comprenant un tambour autour duquel un cordon de l'écran est apte à s'enrouler et un actionneur d'entraînement du tambour tel que décrit précédemment.

L'invention et d'autres avantages de celle-ci apparaitront plus clairement à la lumière de la description qui va suivre de deux modes de réalisation d'un actionneur d'entraînement d'un écran domotique conforme à son principe, faite en référence aux dessins annexés dans lesquels :
- la figure 1 est une coupe de principe d'une installation de manœuvre d'un écran domotique conforme à l'invention,
- la figure 2 est une vue schématique d'un actionneur appartenant à l'installation de la figure 1,
- la figure 3 est une coupe de principe d'un frein à ressort de l'actionneur de la figure 2 , lors d'une phase de montée de la charge, et
- la figure 4 est une coupe analogue à la figure 3 , lors d'une phase de descente de la charge.

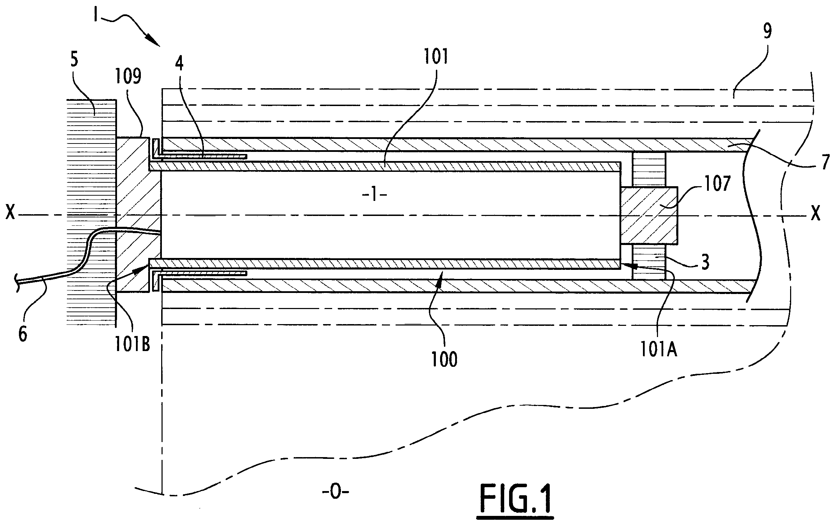

Sur la figure 1 est représentée une installation I de manœuvre d'un écran domotique conforme à l'invention. L'installation I comprend un tube d'enroulement 7 autour duquel un tablier 9 s'enroule et se déroule. Le tube 7 est entraîné par un actionneur 1 en rotation autour d'un axe de révolution X-X et est disposé horizontalement en partie haute d'une ouverture O. L'ouverture O est, par exemple, une ouverture ménagée dans les parois d'un bâtiment. Une telle paroi est représentée, à la figure 1, par un bâti 5. L'actionneur 1 est positionné dans une enveloppe cylindrique 101 et est fixé au bâti 5 par l'intermédiaire d'une pièce de fixation 109 qui fait saillie à une extrémité 101 B de l'enveloppe cylindrique 101. Du côté opposé à la pièce de fixation 109, un arbre de sortie 107 fait saillie à une seconde extrémité 101A de l'enveloppe cylindrique 101 et porte une couronne 3. Cette couronne 3 est solidaire en rotation du tube 7 autour de l'axe X-X. De cette manière, l'actionneur 1 entraîne le tube d'enroulement 7 en rotation autour de l'axe X-X. Un câble d'alimentation 6 apporte l'énergie nécessaire au fonctionnement de l'actionneur 1 et un palier lisse 4 est intercalé coaxialement entre l'enveloppe cylindrique 101 et le tube 7 pour permettre au tube 7 de glisser autour de l'enveloppe cylindrique 101.

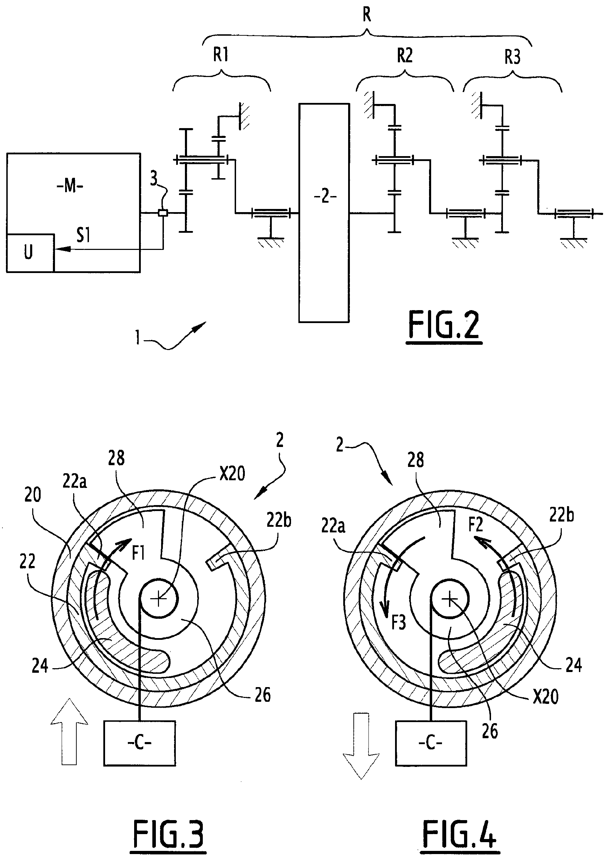

Sur la figure 2 est représenté plus en détail l'actionneur 1 de l'installation I. Cet actionneur 1 comprend un moteur électrique M, un réducteur R et un frein mécanique 2. Le moteur électrique M est un moteur à courant continu à commutation électronique. De ce fait, il comprend un rotor interne formé par un ou plusieurs aimants permanents et un stator comprenant des enroulements de bobines. Les bobines sont chacune alimentées de manière commutative pour créer un champ magnétique tournant, dans lequel est placé le rotor. Les aimants du rotor tournent donc sous l'effet de ce champ magnétique. Par ailleurs, les moteurs à commutation électronique ne disposent pas de système balais-collecteurs, ce qui limite les frottements entre les pièces et rend le moteur plus robuste et plus silencieux. En outre, ce type de moteur se pilote facilement avec une électronique adaptée et permet d'ajuster finement l'accélération, la vitesse et l'efficacité du moteur.

En sortie du moteur est disposé un premier étage R1 du réducteur R. Le frein 2 est disposé entre le premier étage R1 et un deuxième étage R2 du réducteur R. Dans le cas présent, le réducteur comprend un troisième étage R3 disposé en sortie du deuxième étage R2.

Le fait de disposer le frein 2 au sein des étages du réducteur R présente plusieurs avantages. Tout d'abord, le frein 2 est un frein de type mécanique. Il nécessite donc un jeu angulaire minimum pour pouvoir fonctionner. Ce jeu angulaire a pour conséquence que le frein à tendance à glisser, voire à glisser par à-coup. Cela est a priori nuisible au fonctionnement de l'actionneur, car le mouvement de déroulement ou d'enroulement de l'écran domotique risque d'être saccadé. C'est pourquoi, le frein 2 est positionné à proximité de la sortie du moteur M. Ainsi, le jeu angulaire du frein 2 est reparti en aval dans les différents étages du réducteur R. Cependant, il n'est pas judicieux de positionner le frein 2 en sortie du moteur M car sa vitesse d'entrée serait trop élevée. En effet, une vitesse importante à l'entrée du frein 2 engendrerait des vibrations substantielles dues aux balourds des pièces en rotation. Ainsi, le compromis est de positionner le frein 2 entre le premier étage R1 et le deuxième étage R2 du réducteur R.

Sur les figures 3 et 4 est représenté plus en détail le fonctionnement du frein 2. Le frein 2 est un frein à ressort. Il comprend un tambour cylindrique 20 centré sur un axe X20. Les arbres d'entrée et de sortie du frein ont chacun un axe de rotation confondu avec l'axe X20.

L'arbre d'entrée du frein correspond à l'arbre de sortie du premier étage R1 du réducteur R, tandis que l'arbre de sortie du frein correspond à l'arbre d'entrée du deuxième étage R2 du réducteur R. Un ressort 22 est monté de manière serré à l'intérieur du tambour 20, c'est-à-dire que son diamètre extérieur sans contrainte est supérieur au diamètre intérieur du tambour 20. On parle d'une conception de type « tambour ».

Le ressort 22 est un ressort hélicoïdal à spires jointives et comprend, à ses deux extrémités, deux pattes 22a et 22b qui sont recourbées, radialement à l'axe X20, vers l'intérieur. L'arbre d'entrée du frein 2 n'est pas visible sur les figures mais il est solidaire d'une pièce 24 disposée radialement à l'intérieur du ressort 22. Cette pièce 24 est une portion de cylindre centré sur l'axe X20 qui peut coopérer avec l'une ou l'autre des pattes 22a et 22b du ressort 22. En effet, lorsque l'arbre d'entrée du frein 2 tourne, la pièce 24 entraine, dans son mouvement de rotation autour de l'axe X20, la patte 22a ou la patte 22b en fonction du sens de rotation de l'arbre d'entrée. La sortie du frein 2 est formée par un axe de sortie 26 qui porte un taquet 28 dont le diamètre externe est légèrement inférieur au diamètre interne du tambour 20. De manière analogue à la pièce 24, le taquet 28 coopère, dans son mouvement de rotation autour de l'axe X20, avec l'une ou l'autre des pattes 22a et 22b.

Sur la figure 3 est illustré le fonctionnement du frein lors de la montée d'une charge C par l'actionneur. La charge C est un écran domotique tel qu'un volet, un store ou encore un grillage. Pour la bonne compréhension du schéma, la charge C enroule autour de l'axe 26. En pratique, la charge C s'enroule autour du tube 7.

Pour déplacer la charge C vers le haut, il convient de faire tourner le moteur M dans le sens horaire à la figure 2. Ce mouvement est représenté à la figure 2 par une flèche F1. La rotation du moteur dans le sens de la flèche F1 a pour conséquence d'entrainer l'arbre d'entrée du frein 2 et donc la pièce 24 en rotation autour de l'axe X20 dans la direction F1. La pièce 24 vient donc au contact de la patte 22a du ressort 22, ce qui tend à allonger le ressort 22. Cette élongation entraine une réduction de son diamètre extérieur. Ainsi, le frottement entre le ressort 22 et le tambour 20 est diminué, ce qui autorise le déplacement de la pièce 24 en rotation. Dans son déplacement, la pièce 24 entraine le taquet 28 et l'arbre 26 en rotation dans le même sens autour de l'axe X20. La poursuite du mouvement entraine un glissement de l'ensemble formé par la pièce 24, le ressort 22 et le taquet 28 selon la direction F1 dans le tambour 20. La charge C monte.

En pratique, lors de la remontée de la charge C par l'actionneur 2, la charge est susceptible de varier. Par exemple, dans le cas d'un volet roulant, la charge exercée par le volet sur le tambour varie notamment en fonction de la proportion du tablier du volet qui pend en dessous du tambour, donc du degré d'ouverture du volet. Lorsque la dernière lame de volet se décolle du sol, la charge à soulever est maximum, tandis que, lorsque le volet est presque ouvert, le couple moteur à appliquer pour finir de monter le volet roulant est moindre. Le couple moteur doit donc être adapté en fonction de la charge à soulever. Or, la vitesse du moteur inversement proportionnelle au couple est uniquement déduite de la rotation du rotor, soit loin de la charge. En effet, le frein et le réducteur R notamment sont interposés le long de la chaîne cinématique. Pour cela, le moteur comprend une unité électronique U de gestion de vitesse, permettant de moduler la vitesse en sortie du moteur de sorte à fournir une vitesse de rotation constante en sortie du frein 2. Lors de la remontée de la charge C, le moteur M est freiné par le couple résistant exercé par celle-ci. La vitesse du moteur est donc réajustée automatiquement en fonction de la charge C à soulever. En sortie d'actionneur, la vitesse est constante, ce qui offre un intérêt notamment dans l'alignement de différents produits porteurs sur une façade. En effet, dans le cas où différents actionneurs agissent sur plusieurs écrans, le fait d'avoir une vitesse constante en sortie du frein assure l'alignement des différents écrans entre eux. Cela est alors plus plaisant pour l'utilisateur lorsqu'il fait descendre ou remonter plusieurs écrans simultanément. La vitesse constante en sortie d'actionneur offre une garantie de vitesse sur l'ensemble de la course et génère un aspect très qualitatif car il n'y a pas d'effet de moteur poussif ou bruyant du fait des variations de charge. En pratique, l'unité électronique de gestion de vitesse U est intégrée au module électronique de commutation des bobines du stator du moteur M pour ne pas externaliser la partie électronique et ne pas diminuer la compacité de l'actionneur.

Par ailleurs, dans un actionneur d'entraînement d'un écran domotique, il est nécessaire de contrôler la position de l'écran domotique, à savoir le volet ou le store afin de pouvoir déterminer avec précision lorsque celui-ci arrive en fin de course. C'est pourquoi l'actionneur 1 comprend des moyens de repérage de la position du rotor du moteur M. Ces moyens se résument à un codeur de position 3 qui peut être intégré au moteur ou directement à l'arbre de sortie du moteur M, comme représenté à la figure 2.

Dans le cas où le codeur de position est intégré au moteur, la mesure de la position s'effectue en comptant le nombre de commutations qui intervient au sein du moteur. Cette opération de comptage est réalisée directement par l'unité électronique de gestion de vitesse U. Il en découle le nombre de tours effectués par le moteur et, par conséquent, la position de l'écran domotique.

L'intégration d'un frein à ressort sur la chaîne cinématique entre le moteur et le tube d'enroulement et notamment dans le réducteur R de l'actionneur 1, permet d'éviter que le moteur fonctionne en générateur car cela entraînerait des erreurs au niveau du repérage de la position du rotor. L'action du frein 2 intervient plus particulièrement dans la phase de descente de l'actionneur. Cette phase de descente est représentée à la figure 3. Durant cette phase, la charge C entraine l'arbre de sortie 26 en rotation dans le sens anti-horaire. Cette rotation est représentée, à la figure 3, par une flèche F3. Dans son mouvement, l'arbre 26 entraine le taquet 28 qui vient au contact de la patte 22a du ressort 22. Le ressort 22 est donc comprimé, ce qui résulte en une augmentation du diamètre extérieur du ressort 22. Le ressort 22 est donc bloqué dans le tambour 20. Ainsi, lorsque le moteur ne fonctionne pas, la charge C est immobilisée par l'intermédiaire du ressort 22. Cela assure notamment la sécurité d'une personne sous l'écran domotique.

Pour descendre l'écran domotique, le moteur M tourne dans la direction d'une flèche F2, c'est-à-dire dans le sens anti-horaire à la figure 4. Cela entraine que la pièce 24 vient en contact de la patte 22b du ressort 22. Ce mouvement implique une élongation du ressort 22 et donc une diminution du diamètre extérieur du ressort 22. Ainsi, la charge C peut coulisser, de manière maitrisée, sans accélérer la vitesse du moteur M. Le moteur M ne fonctionne donc pas en générateur. Dans cette phase de descente, le moteur tourne de manière à faire glisser l'arbre de sortie à une vitesse constante. La vitesse du moteur est donc adaptée en fonction de la charge appliquée sur l'arbre d'entraînement.

Le fait que le ressort 22 soit monté serrant dans le tambour 20 implique que le frein 2 est en frottement permanent. Autrement dit, le frein 2 présente un couple de traînée permanent qui dissipe l'énergie générée par la charge à la descente et qui est compensé par un « surcouple » de la part du moteur en montée. Ainsi, le frein 2 masque les variations de la charge C au moteur M car ces dernières sont absorbées par le frein. Dans ce document, le terme « permanent » caractérisant le couple de traînée signifie que le couple de traînée prend une valeur non nulle quel que soit le régime du moteur ou sur quasiment toute la plage de fonctionnement du moteur, hormis pour une ou plusieurs valeurs où il s'annule. Par exemple, certains freins présentent un couple de traînée nul lorsque le moteur développe un couple nominal, c'est-à-dire le couple nécessaire à l'entraînement de la charge.

Dans un frein à ressort, il est plus facile de supprimer les bruits de type claquement que dans un frein à came. En effet, il est possible de réduire les bruits de claquement, intervenant notamment entre le taquet 28 et la pièce 24, en intercalant par exemple un coin en élastomère pour amortir le contact entre les pièces.

En variante, le repérage de la position du rotor s'effectue grâce à un codeur de rotation du rotor du moteur M détectant la position de ce rotor. En pratique, ce sont en fait trois capteurs, chacun associés à un enroulement statorique du moteur, qui permettent de reconstituer l'intégralité des signaux S1 de repérage de la position du rotor. Ces signaux S1 sont ensuite communiqués à l'unité électronique de gestion de vitesse U pour adapter la vitesse du moteur en conséquence.

Selon un mode de réalisation alternatif, le codeur de position comprend uniquement 2 capteurs, chacun associés à un enroulement statorique du moteur, et l'unité électronique associée est apte à reconstituer la partie des signaux manquant, associée au troisième enroulement, pour le repérage de la position du rotor du moteur M.

Selon un autre mode de réalisation alternatif, le codeur de rotation du rotor du moteur ne comprend aucun capteur. La position du rotor est repérée électroniquement par l'unité électronique de pilotage du moteur. On parle alors de moteur à commutation électronique sans capteur.

En variante non représentée, le frein 2 est un frein à came configuré pour présenter un couple de traînée quasi permanent. Ce couple de traînée est nul au couple nominal et non nul en dehors du couple nominal. Ainsi, le frein à came présente une friction résiduelle lorsqu'il n'est activé que partiellement, par exemple pour retenir la charge à la descente.

En variante, le réducteur R de l'actionneur 2 comprend un nombre d'étages du réducteur R qui est différent de trois et strictement supérieur à 1.

En variante non représentée, le frein est un frein à ressort comprenant un ressort hélicoïdal qui est monté serrant autour d'un moyeu, les deux extrémités du ressort étant recourbées vers l'extérieur du moyeu et coopèrent chacune avec une pièce solidaire d'un arbre de sortie de frein.

En variante non représentée, l'actionneur 1 entraîne en rotation un tambour autour duquel sont enroulés un ou plusieurs cordons de l'écran. Cela s'applique, entre autres, aux écrans de type store où les cordons sont attachés à une barre de charge en partie basse du store et permettent de régler la hauteur du store.

## Revendications

1. Actionneur (1) d'entrainement d'un écran domotique (C), cet actionneur comprenant :
- un moteur électrique (M),
- un réducteur (R) de transmission du mouvement du moteur à l'écran domotique, et
- un frein (2),
**caractérisé en ce que** le moteur est un moteur électrique (M) à commutation électronique et que le frein est un frein mécanique (2) présentant un couple de traînée permanent et **en ce que** l'actionneur comprend des moyens de repérage de la position d'un rotor du moteur (M) qui sont intégrés au module électronique de commutation des bobines d'un stator du moteur (M).

2. Actionneur (1) selon la revendication 1, **caractérisé en ce que** le frein est un frein à ressort (2) comprenant un ressort hélicoïdal (22) qui est monté serrant dans un tambour (20), les deux extrémités du ressort (22a, 22b) étant recourbées vers l'intérieur du cylindre et coopèrent chacune avec une pièce (24) solidaire d'un arbre d'entrée du frein et avec un taquet (28) solidaire d'un arbre de sortie de frein.

3. Actionneur selon la revendication 1, **caractérisé en ce que** le frein est un frein à ressort comprenant un ressort hélicoïdal qui est monté serrant autour d'un moyeu, les deux extrémités du ressort étant recourbées vers l'extérieur du moyeu et coopèrent chacune avec une pièce solidaire d'un arbre d'entrée du frein et avec un taquet solidaire d'un arbre de sortie du frein.

4. Actionneur (1) selon l'une des revendications 2 et 3, **caractérisé en ce que** le ressort (2) est un ressort hélicoïdal à spires jointives.

5. Actionneur (1) selon la revendication 1, **caractérisé en ce que** le frein est un frein à came.

6. Actionneur (1) selon l'une des revendications précédentes, **caractérisé en ce que** le frein est disposé entre deux étages (R1, R2) du réducteur (R).

7. Actionneur (1) selon l'une des revendications précédentes, **caractérisé en ce qu'**il comprend des capteurs de rotation d'un rotor du moteur détectant la position du rotor.

8. Actionneur (1) selon l'une des revendications précédentes, **caractérisé en ce qu'**il comprend des moyens de reconstitution d'au moins une partie des signaux de repérage de la position d'un rotor du moteur.

9. Installation (I) de manœuvre d'un écran domotique (C), cette installation comprenant un tube (7) autour duquel l'écran est apte à s'enrouler et un actionneur (1) d'entraînement du tube, **caractérisée en ce que** l'actionneur est conforme à l'une des revendications 1 à 8.

10. Installation de manœuvre d'un écran domotique, comprenant un tambour autour duquel un cordon de l'écran est apte à s'enrouler et un actionneur (1) d'entraînement du tambour, **caractérisée en ce que** l'actionneur est conforme à l'une des revendications 1 à 8.

## Patentansprüche

1. Betätigungsvorrichtung (1) für den Antrieb eines am oder im Haus verwendbaren Schirms (C), wobei diese Betätigungsvorrichtung umfasst:
- einen elektrischen Motor (M),
- ein Getriebe (R) zur Übertragung der Bewegung des Motors auf den am oder im Haus verwendbaren Schirm, und
- eine Bremse (2),
**dadurch gekennzeichnet, dass** der Motor ein elektronisch kommutierter Elektromotor (M) ist und dass die Bremse eine mechanische Bremse (2) ist, die ein permanentes Schleppmoment aufweist und dass die Betätigungsvorrichtung Mittel zum Ausrichten der Position eines Rotors des Motors (M) umfasst, die in einem elektronischen Schaltmodul der Spulen eines Stators des Motors (M) integriert sind.

2. Betätigungsvorrichtung (1) nach Anspruch 1, **dadurch gekennzeichnet, dass** die Bremse (2) eine Feder ist, die eine Spiralfeder (22) umfasst, die zusammengepresst in einer Trommel montiert ist, wobei die zwei Enden der Feder (22a, 22b) in das Innere des Zylinders umgebogen sind und jeweils mit einem Teil (24), das mit einer Eingangswelle der Bremse verbunden ist, und mit einer Nocke (28), die mit einer Ausgangswelle der Bremse verbunden ist, zusammenarbeiten.

3. Betätigungsvorrichtung nach Anspruch 1, **dadurch gekennzeichnet, dass** die Bremse eine Federbremse ist, die eine Spiralfeder umfasst, die zusammengepresst um eine Nabe montiert ist, wobei die zwei Enden der Feder in Bezug auf die Nabe nach außen gebogen sind und jeweils mit einem Teil, das mit einer Eingangswelle der Bremse verbunden sind, und mit einer Nocke, die mit einer Ausgangswelle der Bremse verbunden ist, zusammenarbeiten.

4. Betätigungsvorrichtung (1) nach einem der Ansprüche 2 und 3, **dadurch gekennzeichnet, dass** die Feder (2) eine Spiralfeder mit nebeneinanderliegenden Windungen ist.

5. Betätigungsvorrichtung (1) nach Anspruch 1, **dadurch gekennzeichnet, dass** die Bremse eine Nockenbremse ist.

6. Betätigungsvorrichtung (1) nach einem der vorhergehenden Ansprüche, **dadurch gekennzeichnet, dass** die Bremse zwischen zwei Stufen (R1, R2) des Getriebes (R) angeordnet ist.

7. Betätigungsvorrichtung (1) nach einem der vorhergehenden Ansprüche, **dadurch gekennzeichnet, dass** sie Sensoren der Rotation eines Rotors des Motors umfasst, die die Position des Rotors abtasten.

8. Betätigungsvorrichtung (1) nach einem der vorhergehenden Ansprüche, **dadurch gekennzeichnet, dass** sie Mittel zur Nachbildung mindestens eines Teils der Signale der Ausrichtung der Position eines Rotors des Motors umfasst.

9. Betätigungsanlage (I) eines am oder im Haus verwendbaren Schirms (C), wobei die Anlage ein Rohr (7), um das der Schirm gewickelt werden kann und eine Betätigungsvorrichtung zum Antreiben des Rohres umfasst, **dadurch gekennzeichnet, dass** die Betätigungsvorrichtung nach einem der Ansprüche 1 bis 8 ausgebildet ist.

10. Betätigungsanlage eines am oder im Haus verwendbaren Schirms, eine Trommel, um die ein Band des Schirms gewickelt werden kann, und eine Betätigungsvorrichtung (1) für die Trommel umfassend, **dadurch gekennzeichnet, dass** die Betätigungsvorrichtung nach einem der Ansprüche 1 bis 8 ausgebildet ist.

## Claims

1. Actuator (1) for driving a home-automation screen (C), this actuator comprising:
- an electric motor (M),
- a reduction gear (R) for transmitting the movement of the motor to the home-automation screen, and
- a brake (2),
**characterised in that** the motor is an electronically commutated motor (M) and the brake is a mechanical brake (2) having a continuous drag torque and **in that** the actuator comprises means for referencing the position of a rotor of the motor (M) integrated in the electronic commutation module of the coils of a stator of the motor (M).

2. Actuator (1) according to claim 1, **characterised in that** the brake is a spring brake (2) comprising a helical spring (22) which is mounted tightly in a drum (20), the two ends of the spring (22a, 22b) being curved towards the inside of the cylinder and each engaging with a part (24) rigidly connected to a brake input shaft and with a tappet (28) connected to a brake output shaft.

3. Actuator according to claim 1, **characterised in that** the brake is a spring brake comprising a helical spring which is mounted tightly about a hub, the two ends of the spring being curved towards the outside of the hub and each engaging with a part rigidly connected to a brake input shaft and with a tappet rigidly connected to a brake output shaft.

4. Actuator (1) according to any of claims 2 and 3, **characterised in that** the spring (2) is a helical spring with adjoined turns.

5. Actuator (1) according to claim 1, **characterised in that** the brake is a cam brake.

6. Actuator (1) according to any of claims 1 to 3, **characterised in that** the brake is arranged between two stages (R1, R2) of the reduction gear (R).

7. Actuator (1) according to any of claims 1 to 3, **characterised in that** it comprises sensors of rotation of a rotor of the motor detecting the rotor position.

8. Actuator (1) according to any of claims 1 to 3, **characterised in that** it comprises means for restoring at least a portion of the signals for referencing the position of a rotor of the motor.

9. Installation (I) for operating a home-automation screen (C), this installation comprising a tube (7) around which the screen is suitable for being wound and an actuator (1) for driving the tube, **characterised in that** the actuator is according to any of claims 1 to 8.

10. Installation for operating a home-automation screen, this installation comprising a drum around which a cord of the screen is suitable for being wound and an actuator (1) for driving the drum, **characterised in that** the actuator is according to any of claims 1 to 8.
